# EUROPÄISCHE PATENTSCHRIFT

(11) **EP 1 133 612 B1**
(45) Veröffentlichungstag und Bekanntmachung des Hinweises auf die Patenterteilung: **29.12.2004**
(21) Anmeldenummer: 00962172.3
(22) Anmeldetag: 29.07.2000
(51) Int. Cl.: E05F 15/20, H02H 7/085

(54) **VERFAHREN ZUM BEGRENZEN DER SCHLIESSKRAFT VON BEWEGLICHEN TEILEN**
METHOD FOR LIMITING THE CLOSING FORCE OF MOVABLE COMPONENTS
PROCEDE PERMETTANT DE LIMITER LA FORCE DE FERMETURE DE PARTIES MOBILES

(30) Priorität: 01.09.1999 DE 19941475
(43) Veröffentlichungstag der Anmeldung: 19.09.2001
(73) Patentinhaber: ROBERT BOSCH GMBH, 70442 Stuttgart (DE)
(72) Erfinder: LAMM, Hubert, D-77876 Kappelrodeck (DE)
(86) Internationale Anmeldenummer: PCT/DE2000/002511
(87) Internationale Veröffentlichungsnummer: WO 2001/021920

(56) Entgegenhaltungen:
- EP-A- 0 640 740
- DE-A- 2 926 938
- DE-A- 4 321 264
- DE-A- 19 511 581
- DE-A- 19 618 219
- DE-A- 19 638 781
- DE-C- 19 514 257
- DATABASE WPI Section PQ, Week 199940 Derwent Publications Ltd., London, GB; Class Q12, AN 1999-474992 XP002901381 & JP 11 200705 A (YAZAKI CORP), 27. Juli 1999 (1999-07-27)

## Beschreibung

### Stand der Technik

Die Erfindung betrifft ein Verfahren zum Begrenzen der Schließkraft von beweglichen Teilen, insbesondere von Fenstern und Schiebedächern in Kraftfahrzeugen nach der Gattung des unabhängigen Anspruchs.

Viele der bis heute bekannten Verfahren basieren im wesentlichen darauf, daß eine bestimmte, sich im Einklemmfall typischerweise ändernde Meßgröße überwacht wird und bei Überschreiten eines bestimmten, vorgegebenen Grenzwertes Maßnahmen zum Begrenzen der Schließkraft eingeleitet werden. Solche typischen Größen sind beispielsweise die Drehzahl eines die beweglichen Teile antreibenden Motors oder seine Strom- bzw. Leistungsaufnahme. Häufig sind die Grenzwerte zum Auslösen der Schließkraftbegrenzung auch variabel und können sich beispielsweise an veränderliche Reibungsverhältnisse oder Alterungsprozesse anpassen, siehe z.b. DE 19 514 257 C.

Alle diese Verfahren sind jedoch mit dem Nachteil behaftet, daß die Grenzwerte unabhängig von der Art der einzuklemmenden Gegenstände fest vorgegeben sind. Eine Abstimmung der Schließkraftbegrenzung auf unterschiedlich harte oder weiche Gegenstände ist somit nicht möglich.

Somit wird auch nicht berücksichtigt, daß die Dynamik und damit auch die jeweiligen Einklemmkräfte je nach Art des einzuklemmendem Gegenstandes sehr starken Schwankungen unterworfen sein kann.

Bei der Applikation entsprechender Verfahren werden die Kraftanstiege beim Einklemmen harter Gegenstände durch Federn mit relativ großen Federraten von beispielsweise 65N/mm nachgebildet, und weiche Gegenstände durch Federn mit relativ kleinen Federraten von beispielsweise 10N/mm. Eine zulässige Einklemmkraft von 100N wird bei einer großen Federrate schon nach sehr kurzer wegstrecke, bei einer kleinen Federrate erst nach einer relativ langen Wegstrecke erreicht.

Dies führt dazu, daß bei einem fest vorgegeben Wert einer Drehzahländerung als Grenzwert beim Einklemmen eines sehr harten Gegenstandes der Antrieb zum Verstellen der beweglichen Teile sehr schnell ausgeschaltet werden muß, um den Wert der vorgegebenen Einklemmkraft nicht zu überschreiten. Auf der anderen Seite kann es beim Einklemmen sehr weicher Gegenstände sehr lange dauern, bis eine Einklemmschutzmaßnahme aktiv wird.

Bei den gängigen Verfahren wird somit nicht auf unterschiedliche Federraten Rücksicht genommen wird. Je nach Federrate kann es passieren, daß die auf den eingeklemmten Gegenstand wirkenden Kräfte sehr stark unterschiedlich sind. Dies ist ein großer Nachteil, weil ein optimaler Grenzwert als Abschaltkriterium immer nur auf eine bestimmte Federrate abgestimmt werden kann.

### Vorteile der Erfindung

Das erfindungsgemäße Verfahren zum Begrenzen der Schließkraft von beweglichen Teilen mit den Merkmalen des Hauptanspruchs hat den Vorteil, daß durch die Vorgabe eines zeitlichen Grenzwertverlaufs eine optimale Anpassung an verschiedene Federraten möglich wird. Der Grenzwertverlauf kann so gewählt werden, daß beim Einklemmen harter Gegenstände mit hoher Federrate genügend Zeit zum Aktivieren einer Einklemmschutzmaßnahme zur Verfügung steht. Beim Einklemmen von Gegenständen mit kleiner Federrate kann der Antrieb bei weit geringeren Einklemmkräften abgeschaltet werden. Durch die Vorgabe eines bestimmten Grenzwertverlaufs kann somit jeder Federrate ein individueller Grenzwert vorgegeben werden.

Besonders vorteilhaft ist, daß es sich bei dem erfindungsgemäßen Verfahren um ein zweistufiges Verfahren handelt. In der ersten Stufe werden die jeweils aktuellen Motordrehzahlen n anhand von periodischen Signalen eines mit dem Verstellantrieb verbundenen Sensors ermittelt, und daraus eine für die aktuelle Änderung der Motordrehzahl typische Größe Δn bestimmt, betragsmäßig aufsummiert und in einem Speicher abgelegt. Natürlich liegt keine strenge Periodizität der Signale vor, insbesondere dann nicht, wenn die Motordrehzahl einen Einbruch erleidet.

Überschreitet die aufsummierte Größe ∑Δn einen Schwellwert S, dann geht das Verfahren über in die zweite Stufe, bei der der Zeitzähler und der Grenzwertverlaufgeber gestartet werden. Der Zeitzähler muß nicht notwendigerweise gestartet werden, er kann auch permanent mitlaufen. Entscheidend ist nur, daß ihm der Zeitpunkt des Auslösens der zweiten Stufe bzw. das Starten des Grenzwertverlaufgebers signalisiert wird.

In dieser zweiten Stufe befindet sich das System in einer Art Alarmzustand und der Bewegungsvorgang wird gemäß der weiteren Verfahrensschritte differenziert beobachtet um Einklemmsituationen gerade im Hinblick auf die Art der einzuklemmenden Gegenstände gezielt zu erkennen. Dazu werden die aktuellen Grenzwerte g(t) des Grenzwertverlaufgebers mit den Werten der aktuellen, aufsummierten Größen ΣΔn verglichen. Besonders vorteilhaft ist, daß durch die Vorgabe bzw. das Starten des zeitlichen Grenzwertverlaufs g(t) jeder Federrate ein individueller Grenzwert vorzugeben ist, weil auch die zeitliche Entwicklung der Größe ΣΔn je nach Federrate einen unterschiedlichen zeitlichen Verlauf aufweist.

Das Auslösen einer Maßnahme zum Begrenzen der Schließkraft findet erst statt, wenn der jeweils aktuelle Wert der aufsummierten Größe ΣΔn gleich oder größer ist als der jeweils aktuelle Grenzwert gⱼ(t). Dann wird beispielsweise der Antrieb stillgesetzt oder reversiert. Gleichzeitig werden der Zeitzähler und der Summenspeicher zurückgesetzt.

Erreichen die jeweils aktuellen Werte der aufsummierten Größen ∑Δn nicht die jeweils aktuellen Grenzwerte gⱼ(t), und ändern sich die Werte der aufsummierten Größen ∑Δn innerhalb einer vorgegebenen Toleranz Δ und einer vorgegebenen Zeit Δt nicht, dann wird der Vergleich abgebrochen und der Zeitzähler und der Summenspeicher zurückgesetzt. Dann ist nämlich davon auszugehen, daß kein ernsthaftes Einklemmen bevorstand, und es sich beispielsweise lediglich um eine partielle Schwergängigkeit im System gehandelt hat.

Bei jedem Zurücksetzen des Summenspeichers und des Zeitzählers geht das System zurück in die erste Stufe, bei der lediglich überwacht wird, ob die aufsummierte Größe ΣΔn einen bestimmten Schwellwert überschreitet. Um zu verhindern, daß dieses Überschreiten bedingt durch die Aufsummierung automatisch nach einer gewissen Zeit erfolgt, muß in dieser ersten Stufe der Summenspeicher fortlaufend dekrementiert werden. Diese Dekrementierung hat natürlich entsprechend langsam zu erfolgen.

Durch die in den Unteransprüchen angegebenen Maßnahmen sind vorteilhafte Weiterbildungen des Verfahrens nach dem Hauptanspruch möglich.

So ist es von Vorteil, wenn das Ermitteln der jeweils aktuellen Motordrehzahlen n anhand von periodischen Flankenwechseln durchgeführt wird. Solche Flankenwechsel werden typischerweise von einem zwei- oder mehrpoligen Ringmagneten bereitgestellt, der an einer drehbaren Achse des Motors montiert ist. Bei Rotation der Achse ergeben sich Signaländerungen, die von einem Hallsensor detektiert werden. Aus den periodischen Flankenwechseln kann beispielsweise durch Messen der Periodendauer auf die jeweils aktuelle Motordrehzahl geschlossen werden.

In der Praxis hat es sich als besonders vorteilhaft herausgestellt, wenn für die Änderung der Motordrehzahl Δn die Differenz eines aktuellen Drehzahlwertes nᵢ und eines unmittelbar vorhergehenden Drehzahlwertes nᵢ₋₁ berechnet wird. Durch die Bildung dieser Differenz erhält man in erster Näherung die Ableitung der Motordrehzahl n nach der zurückgelegten Wegstrecke des zu verstellenden, beweglichen Teils.

Das erfindungsgemäße Verfahren ermöglicht es, einen beliebigen, zeitlichen Grenzwertverlauf vorzugeben, mit dem jeder beliebigen Federrate ein ganz bestimmter Grenzwert zuzuordnen ist. Als überaus vorteilhaft hat sich herausgestellt, wenn der Verlauf der Grenzwerte g(t) von vorgebbaren, empirisch ermittelten Eckpunkten gᵢ aus interpoliert wird. Dies vereinfacht zum einen die Applikation des Verfahrens, zum anderen ist eine gewisse Flexibilität gewährleistet, weil ausgehend von diesen Eckpunkten gᵢ verschiedene, an das jeweilige System angepaßte Funktionen durch sie hindurch gelegt werden können. Vorteilhafterweise werden die Eckpunkte gᵢ als Tabelle im Grenzwertverlaufgeber abgelegt.

Ein weiterer, sehr großer Vorteil ergibt sich, wenn sich der Grenzwertverlauf an veränderliche Betriebsbedingungen automatisch anpaßt. Beispielsweise können dann Schwergängigkeiten aufgrund von Alterungserscheinungen erkannt und berücksichtigt werden.

Eine gängige und vorteilhafte Maßnahme zum Begrenzen des der Schließkraft des Verstellantriebs ist, daß Stoppen oder Reversieren des Verstellantriebs, oder auch das Fahren des beweglichen Teils in eine ursprüngliche Position.

### Zeichnung

In der Zeichnung ist ein Ausführungsbeispiel eines erfindungsgemäßen Verfahrens dargestellt und in der nachfolgenden Beschreibung näher erläutert.

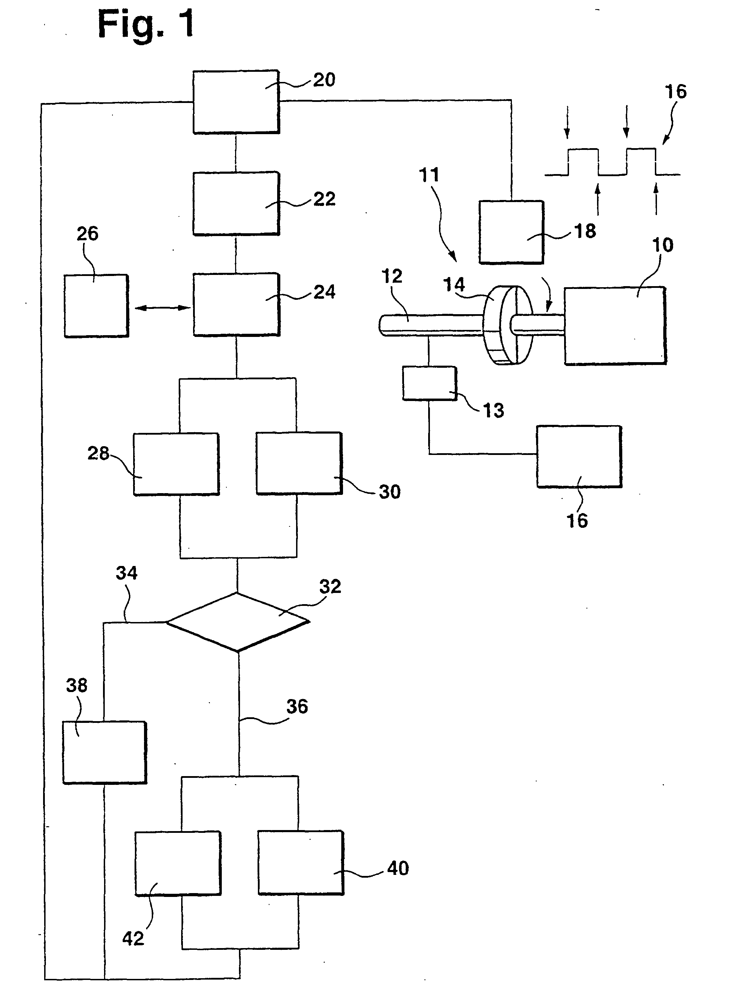

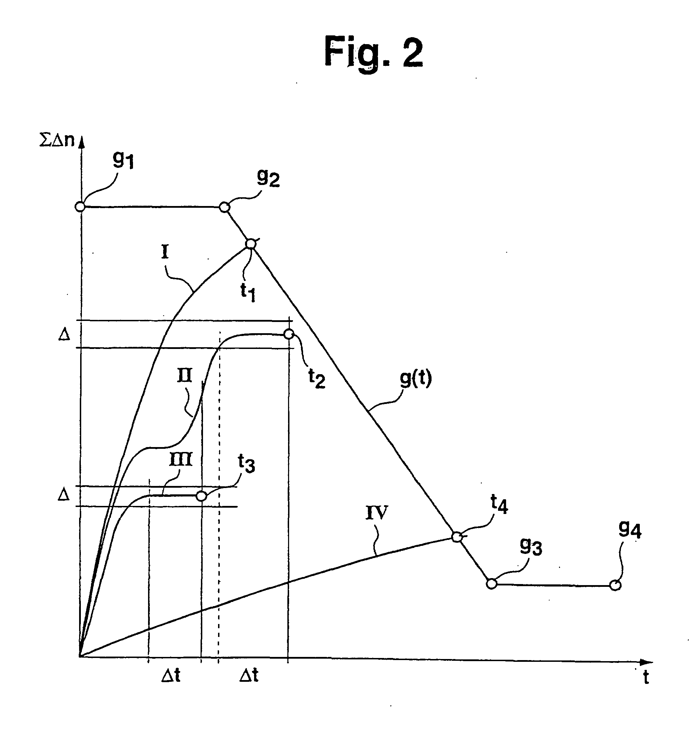

Es zeigen Figur 1 einen Ablauf des erfindungsgemäßen Verfahrens und Figur 2 ein Diagramm, welches das Durchlaufen verschiedener Verfahrensschritte bei zwei verschiedenen Federraten darstellt.

### Beschreibung des Ausführungsbeispiels

Das in Figur 1 dargestellte Ausführungsbeispiel eines erfindungsgemäßen Verfahrens zum Begrenzen der Schließkraft von beweglichen Teilen zeigt schematisch einzelne Teile eines Verstellantriebs und ein Ablaufdiagramm in mehreren Schritten.

Ein Motor 10 eines Verstellantriebs 11 treibt eine Welle 12 an, die über eine Getriebeeinheit 13 mit einem beweglichen Teil 16 verbunden ist. Auf der Welle 12 ist ein zweipoliger Ringmagnet 14 drehfest montiert, der bei Rotation der Welle 12 periodische Flankenwechsel 16 in einem Hallsensor 18 erzeugt.

Aus den periodischen Flankenwechseln 16 des Hallsensors 18 wird in einer ersten Stufe des Verfahrens in dem Verfahrensschritt 20 die Drehzahl n des Motors 10 ermittelt. In einem zweiten Verfahrensschritt 22 wird aus den jeweils aktuellen Motordrehzahlen n eine für die aktuelle Änderung der Motordrehzahl typische Größe Δn berechnet. Bei dieser Berechnung wird die Differenz zwischen einem aktuellen Drehzahlwert nᵢ und einem unmittelbar vorhergehenden Drehzahlwert nᵢ₋₁ gebildet. Diesen Differenzenbildung kann im Grenzfall als Ableitung der Drehzahl nach dem Weg aufgefaßt werden. In einem weiteren Verfahrensschritt 24 werden in einem Summenspeicher die jeweils aktuellen Werte der Drehzahländerungen aufsummiert und abgespeichert. Diese aufsummierten Werte ΣΔn werden im Verfahrensschritt 26 fortlaufend mit einem Schwellwert S verglichen.

Bei einem Drehzahleinbruch steigt der Wert ΣΔn sehr stark an und überschreitet die Schwelle S. Damit dies nicht auch im Normalbetrieb passiert, ist es nötig, den Summenspeicher fortlaufend zu dekrementieren, da die Summe der Ableitungen sich ständig ändert und die Schwelle S auch ohne Vorliegen einer Einklemmsituation überschritten werden kann. Das Maß dieser fortlaufenden Dekrementierung muß natürlich an das System angepaßt sein.

Überschreitet die aufsummierte Drehzahländerung Δn den Schwellwert S, dann wird die zweite Stufe des Verfahrens durchlaufen, bei der im Schritt 28 ein Zeitzähler und im Schritt 30 ein Grenzwertverlaufgeber gestartet wird. Damit beginnt der Zeitpunkt t = 0, zu dem der Grenzwertverlaufgeber beginnt, einen zeitlichen Verlauf von Grenzwerten g(t) auszugeben. Im Schritt 32 werden die aktuellen Grenzwerte gⱼ(t) mit den aktuellen aufsummierten Größen ∑Δn verglichen.

In Abhängigkeit dieses Vergleiches wird dann entweder der Verfahrensweg 34 oder der Verfahrensweg 36 eingeschlagen.

Unter der Bedingung, daß die Summe der aufsummierten Motordrehzahländerungen ∑Δn kleiner ist als der aktuelle Grenzwert gⱼ(t), und unter der zusätzlichen Bedingung, daß der jeweils aktuelle Wert der aufsummierte Größe ∑Δn sich innerhalb einer vorgegebenen Toleranz Δ und einer vorgegebenen Zeiteinheit Δt nicht ändert, wird im Verfahrensschritt 38 sowohl der Zeitzähler als auch der Summenspeicher zurückgesetzt. Dies stellt eine Abbruchbedingung dar, die dem System signalisiert, daß keine akute Einklemmgefahr vorliegt.

Ist der jeweils aktuelle Wert der aufsummierten Größe ΣΔn gleich oder größer als der jeweils aktuelle Grenzwert gj(t). dann wird der Weg 36 eingeschlagen, bei dem im Schritt 40 eine Maßnahme zur Schließkraftbeschränkung ausgelöst wird. Eine solche Maßnahme beinhaltet in diesem Ausführungsbeispiel das Reversieren des Motors und somit das Reversieren des beweglichen Teile 16. Gleichzeitig wird im Schritt 42 der Zeitzähler auf t = 0 sowie der Summenspeicher zurückgesetzt.

Nach Beendigung der Verfahrensschritte 38 bzw. 42 und 40 geht das System wieder über in den Verfahrensschritt 20, und die Motordrehzahlen werden aufs Neue erfaßt und die entsprechenden Änderungen überwacht.

In Figur 2 ist ein Diagramm dargestellt, bei der auf der x-Achse die Zeit t und auf der y-Achse die Summe der Drehzahländerungen ΣΔn eingetragen ist. In das Diagramm sind verschiedene zeitliche Verläufe von Anstiegen der aufsummierten Größe ΣΔn eingetragen, wobei sich die Verläufe I bis III einer relativ harten Federrate und der Verlauf IV auf eine relativ weiche Federrate beziehen.

Zusätzlich eingezeichnet ist ein typischer Grenzwertverlauf g(t), der durch die vier verschiedenen Eckpunkte g₁ bis g₄ vorgegeben ist. Der zeitliche Verlauf des Grenzwertes wird durch Interpolation zwischen diesen vier Eckpunkten g₁ bis g₄ gewonnen.

Die Kurve I spiegelt einen typischen Einklemmvorgang wider, bei dem die Drehzahl am Motor innerhalb einer relativ kurzen Zeit stark abfällt, wodurch die Summe der Drehzahländerungen ΣΔn sehr drastisch ansteigt. Zum Zeitpunkt t₁ schneidet der Verlauf der Kurve I den Grenzwertverlauf g(t), womit die Bedingung für das Auslösen der Schließkraftbegrenzung vorliegt.

Der Anstieg der Kurve II ist anfangs genauso steil wie der Anstieg der Kurve I, durchläuft dann aber zwei Bereiche i und ii mit sehr flacher Steigung. Der erste Bereich i erfüllt nicht die Abbruchbedingung des erfindungsgemäßen Verfahrens, weil sich die aufsummierte Größe ∑Δn innerhalb der vorgegebenen Zeit Δt zu stark ändert. Deshalb steigt die Kurve II weiter an und geht in den zweiten sehr flachen Bereich ii über. Am Endpunkt der Kurve zum Zeitpunkt t₂ wird hier allerdings die Abbruchbedingung erfüllt, der Wert der aufsummierten Größe ΣΔn ändert sich innerhalb des vorgegebenen Zeitintervalls Δt nicht stärker als die Toleranz Δ. Deshalb wird zum Zeitpunkt t₂ abgebrochen und der Summenspeicher sowie der Zeitzähler zurückgesetzt.

Bei der Kurve III, die anfangs einen ähnlich steilen Anstieg aufweist wie die beiden Kurven I und II, wird die Abbruchbedingung schon sehr früh zum Zeitpunkt t₃ erfüllt.

Im Unterschied zu den drei Kurven I bis III zeigt die Kurve IV einen typischen Verlauf für eine weiche Feder. Charakteristisch dafür ist der relativ flache Anstieg und der trotzdem noch relativ frühe Zeitpunkt t₄, zu dem die Kurve IV den Grenzwertverlauf g(t) schneidet und damit die Auslösebedingung für die Schließkraftbegrenzung erfüllt.

Je nach Grenzwertverlauf g(t), insbesondere durch die Wahl der Steigung zwischen den Punktens g₂ und g_{3'} können unterschiedlichen Federraten unterschiedliche Auslösebedingungen bzw. Einklemmkräfte zugeordnet werden. Auch die Dynamik der Schließkraftbegrenzung kann auf unterschiedliche Federraten abgestimmt werden.

## Patentansprüche

1. Verfahren zum Begrenzen der Schließkraft von beweglichen Teilen (16), insbesondere von Fenstern und Schiebedächern in Kraftfahrzeugen, die von einem elektromotorischen verstellantrieb (11) angetrieben werden, mit mindestens folgenden Schritten:
- Ermitteln der jeweils aktuellen Motordrehzahlen n anhand von periodischen Signalen eines mit dem Verstellantrieb (11) verbundenen Sensors (18),
- Berechnen jeweils einer für die aktuelle Änderung der Motordrehzahlen typischen Größe Δn,
- Aufsummieren und Speichern der jeweils aktuellen typischen Größe Δn in einem Summenspeicher (24),
- Starten eines Zeitzählers (28) und eines Grenzwertverlaufgebers (30), wenn die aufsummierte Größe ΣΔn einen Schwellwert überschreitet,
- Vergleichen der aktuellen Grenzwerte g(t) des Grenzwertverlaufgebers mit den Werten der aktuellen, aufsummierten Größen ΣΔn,
- Auslösen einer Maßnahme zum Begrenzen der Schließkraft und Rücksetzen des Zeitzählers (28) und des Summenspeichers (30), wenn der jeweils aktuelle Wert der aufsummierten Größe ∑Δn gleich oder größer ist als der jeweils aktuelle Grenzwert g(t),
- Abbruch des Vergleichs und Rücksetzen des Zeitzählers (28) und des Summenspeichers (30), wenn der jeweils aktuelle Wert der aufsummierten Größe ΣΔn kleiner ist als der jeweils aktuelle Grenzwert gⱼ(t) und innerhalb einer vorgegebenen Toleranz Δ und einer vorgegebenen Zeiteinheit Δt konstant bleibt.

2. Verfahren nach Anspruch 1, **dadurch gekennzeichnet, daß** das Ermitteln der jeweils aktuellen Motordrehzahlen n anhand von periodischen Flankenwechseln (16) durchgeführt wird.

3. Verfahren nach Anspruch 1 oder 2, **dadurch gekennzeichnet, daß** als die für die Änderung der Motordrehzahl Δn typische Größe die Differenz eines aktuellen Drehzahlwertes nᵢ und eines unmittelbar vorhergehenden Drehzahlwertes nᵢ₋₁ berechnet wird.

4. Verfahren nach einem der Ansprüche 1 bis 3, **dadurch gekennzeichnet, daß** der Verlauf der Grenzwerte g(t) von vorgebbaren, empirisch ermittelten Eckpunkten gᵢ aus interpoliert wird.

5. Verfahren nach Anspruch 4, **dadurch gekennzeichnet, daß** die Eckpunkte gᵢ als Tabelle im Grenzwertverlaufgeber (30) abgelegt werden.

6. Verfahren nach einem der Ansprüche 1 bis 5, **dadurch gekennzeichnet, daß** sich der Grenzwertverlauf an veränderliche Betriebsbedingungen anpaßt.

7. Verfahren nach einem der vorhergehenden Ansprüche, **dadurch gekennzeichnet, daß** zum Begrenzen der Schließkraft der Verstellantrieb () gestoppt oder reversiert wird.

## Claims

1. Method for limiting the closing force of movable parts (16), in particular of windows and sliding roofs in motor vehicles, which are driven by an electric motor adjusting drive (11), having at least the following steps:
- determining the respectively current motor speeds n using periodic signals from a sensor (18) which is connected to the adjusting drive (11),
- calculating in each case a variable Δn typical of the current change in the motor speeds,
- adding up and storing the respectively current, typical variable Δn in a sum memory (24),
- starting a time counter (28) and a limit-value profile transmitter (30) if the added up variable ∑Δn exceeds a threshold value,
- comparing the current limit values g(t) of the limit-value profile transmitter with the values of the current, added up variables ΣΔn,
- releasing a measure for limiting the closing force and resetting the time counter (28) and the sum memory (30) if the respectively current value of the added up variable ∑Δn is equal to or greater than the respectively current limit value g(t),
- breaking off the comparison and resetting the time counter (28) and the sum memory (30) if the respectively current value of the added up variable ΣΔn is smaller than the respectively current limit value gj(t) and remains constant within a predetermined tolerance Δ and a predetermined time unit Δt.

2. Method according to Claim 1, **characterized in that** the determining of the respectively current motor speeds n is carried out with reference to periodic flank changes (16).

3. Method according to Claim 1 or 2, **characterized in that** the difference between a current speed value nᵢ and a directly preceding speed value nᵢ₋₁ is calculated as the variable typical of the change in the motor speed Δn.

4. Method according to one of Claims 1 to 3, **characterized in that** the profile of the limit values g(t) is interpolated from predeterminable, empirically determined corner points gᵢ.

5. Method according to Claim 4, **characterized in that** the corner points gᵢ are stored as a table in the limit-value profile transmitter (30).

6. Method according to one of Claims 1 to 5, **characterized in that** the limit-value profile is adapted to variable operating conditions.

7. Method according to one of the preceding claims, **characterized in that** the adjusting drive (11) is stopped or reversed to limit the closing force.

## Revendications

1. Procédé permettant de limiter la force de fermeture de parties mobiles (16), notamment de fenêtres et de toits ouvrants dans des véhicules automobiles, qui sont entraînées par un entraînement de réglage (11) électromotorisé avec au moins les étapes suivantes consistant à :
- déterminer les régimes moteur n respectivement actuels à l'aide de signaux périodiques d'un capteur (18) relié à l'entraînement de réglage (11),
- calculer respectivement une grandeur Δn typique pour la modification actuelle des régimes moteur,
- totaliser et enregistrer la grandeur Δn typique respectivement actuelle dans une mémoire de sommes (24),
- démarrer un compteur de temps (28) et un indicateur de courbe de valeur limite (30) lorsque la grandeur totalisée ΣΔn dépasse une valeur de seuil,
- comparer les valeurs limites actuelles g(t) de l'indicateur de courbe de valeur limite aux valeurs des grandeurs actuelles totalisées ΣΔn,
- déclencher une mesure pour limiter la force de fermeture et remettre à zéro le compteur de temps (28) et la mémoire de sommes (30) lorsque la valeur respectivement actuelle de la grandeur totalisée ∑Δn est supérieure ou égale à la valeur limite respectivement actuelle g(t),
- interrompre la comparaison et la remise à zéro du compteur de temps (28) et de la mémoire de sommes (30) lorsque la valeur respectivement actuelle de la grandeur totalisée ΣΔn est inférieure à la valeur limite respectivement actuelle gⱼ(t) et reste constante dans une tolérance donnée Δ et dans une unité de temps Δt donnée.

2. Procédé selon la revendication 1,
**caractérisé en ce que**
la détermination des régimes moteur n respectivement actuels s'effectue à l'aide de changements de flancs périodiques (16).

3. Procédé selon la revendication 1 ou 2,
**caractérisé en ce que**
la différence entre une valeur de régime actuelle ni et une valeur de régime directement provisoire nᵢ₋₁ est calculée en tant que grandeur typique pour la modification du régime moteur Δn.

4. Procédé selon l'une quelconque des revendications 1 à 3,
**caractérisé en ce que**
le gradient des valeurs limites g(t) est interpolé par des points d'angle gᵢ déterminés empiriquement et pouvant être prédéfinis.

5. Procédé selon la revendication 4,
**caractérisé en ce que**
les points d'angle gᵢ sont déposés en tant que table dans l'indicateur de courbe de valeur limite (30).

6. Procédé selon l'une quelconque des revendications 1 à 5,
**caractérisé en ce que**
le gradient de valeur limite s'adapte à des conditions de fonctionnement variables.

7. Procédé selon l'une quelconque des revendications précédentes,
**caractérisé en ce que**
l'entraînement de réglage (11) est arrêté ou inversé pour limiter la force de fermeture.
